# EUROPÄISCHE PATENTSCHRIFT

(11) **EP 3 626 412 B1**
(45) Veröffentlichungstag und Bekanntmachung des Hinweises auf die Patenterteilung: **06.09.2023**
(21) Anmeldenummer: 18195637.6
(22) Anmeldetag: 20.09.2018
(51) Int. Cl.: B25J 15/06, B25J 13/08, B65G 47/91

(54) **SAUGGREIFER SOWIE VERFAHREN ZUM ÜBERWACHEN DER FUNKTIONSWEISE EINES SAUGGREIFERS**
VACUUM GRIPPER AND METHOD FOR MONITORING THE FUNCTIONALITY OF A VACUUM GRIPPER
PINCE ASPIRANTE AINSI QUE PROCÉDÉ DE SURVEILLANCE DU FONCTIONNEMENT D'UNE PINCE ASPIRANTE

(43) Veröffentlichungstag der Anmeldung: 25.03.2020
(73) Patentinhaber: FIPA Holding GmbH, 85737 Ismaning (DE)
(72) Erfinder: BLOMEYER, Niels, 82319 Starnberg (DE)
(74) Vertreter: Meissner Bolte Partnerschaft mbB

(56) Entgegenhaltungen:
- EP-A1- 3 290 167
- WO-A1-2007/033830
- DE-A1- 19 847 314
- DE-A1-102005 047 385
- DE-A1-102007 022 322
- DE-U1-202008 010 424
- DE-U1-202008 010 424
- US-A1- 2003 038 491

## Beschreibung

Die vorliegende Erfindung betrifft allgemein auf der Vakuumtechnik basierende Greifersysteme für die dynamische Handhabung von Gegenständen. Im Einzelnen betrifft die Erfindung einen als Vakuumsauger ausgeführten Sauggreifer sowie ein Verfahren zum Überwachen der Funktionsweise eines solchen Sauggreifers.

Sauggreifer werden dazu benötigt, um Gegenstände anzusaugen, anzuheben und an einen anderen Ort bringen zu können. Hierfür weist ein Sauggreifer in der Regel mindestens einen flexiblen Saugnapf auf, der einen an eine Unterdruckquelle anschließbaren Saugraum begrenzt und einen eine Saugöffnung umgrenzenden vorderen Endbereich sowie einen gegenüberliegenden hinteren Endbereich aufweist. Die Saugöffnung des Saugnapfes ist in der Regel mit einer Dichtlippe gebildet, die an der Oberfläche des zu handhabenden Gegenstandes anliegt bzw. anlegbar ist und dann zwischen dem Saugnapf und der Oberfläche des Gegenstandes einen Saugraum umschließt, welcher entsprechend evakuiert werden kann. Dadurch legt sich der Saugnapf dicht an die Oberfläche des Gegenstandes an und hält diesen pneumatisch fest.

Insbesondere bei der Handhabung von flachen Objekten, wie beispielsweise Blechen beispielsweise in der Automobilindustrie haben sich derartige Sauggreifer bewährt.

Die Verwendung von bekannten Sauggreifern beispielsweise zur Handhabung von anderen, insbesondere bruch- und/oder verformungsempfindlichen Gegenständen ist derzeit jedoch nur eingeschränkt möglich. Dies liegt insbesondere daran, dass eine prozesssichere Handhabung von solchen Gegenständen mit Hilfe von Sauggreifern verlangt, dass der Sauggreifer eine maximale Zuverlässigkeit aufweist. Der nächstliegende Stand der Technik EP3290167 A1 offenbart die Positionsgenauigkeit und Positionstreue von mit Hilfe eines Sauggreifers gehaltenen Gegenständen zu überwachen. Zu diesem Zweck weist der Sauggreifer eine erste Sensorkomponente sowie eine mit der ersten Sensorkomponente wechselwirkende zweite Sensorkomponente auf. Die erste Sensorkomponente ist an einem Bereich des elastisch verformbaren Saugkörpers angeordnet, während die zweite Sensorkomponente an einem Basisabschnitt ortsfest angeordnet ist. Mit dieser Anordnung der ersten und zweiten Sensorkomponente ist eine Relativbewegung der ersten Sensorkomponente zur zweiten Sensorkomponente ermittelbar. Anhand dieser Relativbewegung kann anschließendi die Positionsgenauigkeit und Positionstreue von mit Hilfe des Sauggreifers gehaltenen Gegenständen überwacht werden.

Demgemäß liegt der Erfindung die Aufgabe zugrunde, einen Sauggreifer der eingangs genannten Art dahingehend weiterzubilden, dass dieser trotz eines einfachen Aufbaus besonders zuverlässig Gegenstände greifen kann. Insbesondere soll ein Sauggreifer bereitgestellt werden, bei dem in einer einfach zu realisierenden Weise stets sichergestellt ist, dass der Sauggreifer nach einem vorab festgelegten oder festlegbaren Ereignisablauf betätigt werden kann, wobei gleichzeitig die von dem Sauggreifer auf den zu greifenden bzw. handzuhabenden Gegenstand einwirkenden Kräfte stets kontrollierbar sind.

Diese Aufgabe wird erfindungsgemäß durch einen Sauggreifer gemäß dem unabhängigen Patentanspruch 1 sowie durch ein Verfahren zum Überwachen der Funktionsweise eines Sauggreifers gemäß dem nebengeordneten Patentanspruch 11 gelöst.

Demgemäß betrifft die Erfindung insbesondere einen Sauggreifer zum Handhaben von Gegenständen, wobei der Sauggreifer einen flexiblen Saugnapf aufweist, der einen an eine Unterdruckquelle anschließbaren Raum begrenzt und einen an eine Saugöffnung angrenzenden vorderen Endbereich sowie einen gegenüberliegenden hinteren Endbereich aufweist. Der erfindungsgemäße Sauggreifer weist ferner einen Saugnapfhalter auf, welcher mit dem hinteren Endbereich des Saugnapfes verbunden ist.

Insbesondere ist erfindungsgemäß vorgesehen, dass dem Sauggreifer ein System zur Funktionsüberwachung zugeordnet ist, welches mindestens ein in dem Sauggreifer angeordnetes Sensorelement aufweist, wobei das mindestens eine Sensorelement ausgebildet ist, ein Sensorsignal auszugeben, welches - zumindest in einem dynamischen Bereich des Sensorelements - direkt oder indirekt von dem Wert eines in dem Saugraum anliegenden Unterdruckes abhängt.

Die mit der erfindungsgemäßen Lösung erzielbaren Vorteile liegen auf der Hand: insbesondere ist somit mit Hilfe des in dem Saugraum des Sauggreifers angeordneten Sensorelements mindestens eine Druckmessung über eine vorab festgelegte oder festlegbare Zeitperiode möglich, wobei anschließend das von dem Sensorelement ausgegebene Sensorsignal analysiert wird bzw. analysiert werden kann.

Mit der erfindungsgemäßen Lösung ist es in zuverlässiger Weise möglich, potentielle Abweichungen der Funktionsweise des Sauggreifers zu erkennen und ggf. automatisch entsprechend zu reagieren, um der Abweichung bzw. den Abweichungen entgegenzuwirken. Derartige potentielle Abweichungen der Funktionsweise des Sauggreifers werden mit Hilfe des mindestens einen Sensorelements insbesondere dann detektiert und von einer Auswerteeinrichtung des dem Sauggreifer zugeordneten Überwachungssystems analysiert, wenn der Sauggreifer betätigt wird, also auf einen Gegenstand abgesetzt wird, um in dem Saugraum des Saugnapfes ein Vakuum zu erzeugen.

Die erfindungsgemäße Lösung ermöglicht es insbesondere, potentielle Fehlfunktionen des Sauggreifers, die einen negativen Einfluss auf den Greifvorgang haben bzw. haben können, möglichst frühzeitig zu erkennen. Nach Erkennen von potentiellen Fehlfunktionen können automatisch Gegenmaßnahmen initiiert werden, mit welchen eine Abweichung möglichst frühzeitig kompensierbar ist.

So eignet sich das dem Sauggreifer zugeordnete System zur Funktionsüberwachung insbesondere dazu, einen Verschleiß von Komponenten des Sauggreifers und insbesondere von Komponenten des flexiblen Saugnapfes oder des Saugnapfes selber zu erfassen. Als Indikator für einen derartigen Verschleiß dient dabei der sich beim Betätigen des Sauggreifers in dem Saugraum einstellende Unterdruck bzw. dessen Wert.

Wenn beispielsweise erfasst wird, dass der Ist-Wert des in dem Saugraum anliegenden Unterdruckes bei einem vorab festgelegten oder festlegbaren Wert eines zur Betätigung des Sauggreifers an dem Sauggreifer angelegten Vakuums einen bestimmten Soll-Wert unterschreitet, ist auf einen Verschleiß von Komponenten des Sauggreifers rückzuschließen.

Potentielle Abweichungen der Funktionsweise des überwachten Sauggreifers werden insbesondere durch das mindestens eine in dem Sauggreifer angeordnete Sensorelement detektiert und Abweichungen können beispielsweise über Fehlermeldungen an den Kunden bzw. den Betreiber des Sauggreifers oder über eine Remote-Control-Schnittstelle an die Herstellerfirma bzw. an einen zuständigen Fernwartungsservice übermittelt werden.

Dabei liegt der Erfindung die Erkenntnis zugrunde, dass in einem Fall, wenn sich beispielsweise durch mechanischen Verschleiß des Saugnapfes oder anderen Komponenten des Sauggreifers oder durch eine unbeabsichtigte Abnahme eines in dem Saugraum anliegenden Unterdrucks (auf Grund einer Leckage) das charakteristische Ansprechsignal des mindestens einen Sensorelements beim Betätigen des Sauggreifers ändert und von einem idealen Ansprechsignal (Soll-Ansprechsignal) abweicht, dies als Indiz für eine potentielle Fehlfunktion herangezogen werden kann.

In vorteilhafter Weise sind in einer Auswerteeinrichtung des dem Sauggreifer zugeordneten Systems zur Funktionsüberwachung unterschiedliche Soll-Ansprechsignale des mindestens einen Sensorelements abgelegt, welche beispielsweise vorab im Rahmen einer Kalibrierung oder im Rahmen einer Initiierung des Systems zur Funktionsüberwachung bei unterschiedlichen Greifgütern oder Greifgüterarten aufgenommen wurden. Als unterschiedliche Greifgüter bzw. Greifgüterarten kommen beispielsweise flache Metallbleche, Kartonagen, Holzgegenstände, oder Stoffgegenstände in Frage, die auf Grund unterschiedlicher Oberflächenbeschaffenheiten zum Teil offenporig oder zumindest teilweise offenporig ausgeführt sind, so dass sich bereits aus diesem Grund beim Betätigen des Sauggreifers unterschiedliche in dem Saugraum einstellende Unterdrücke einstellen.

Der Grad der Änderung bzw. der Grad der Abweichung von einem Soll-Ansprechsignal kann als Indiz für eine fehlerhafte Funktionsweise des Sauggreifers und/ oder als ein Indiz für einen ungewollten Vakuumverlust durch Leckage beim Betätigen des Sauggreifers dienen.

Abhängig von der Art der Abweichung kann automatisch mindestens einer der nachfolgenden Schritte ausgewählt und ausgeführt werden:
i) es wird regelnd auf die Ansteuerung des Sauggreifers eingewirkt, um potentielle Vakuumverluste in dem Sauggraum des Sauggreifers beim Betätigen des Sauggreifers durch Leckagen entgegenzuwirken; und/oder
ii) es wird über eine optische und/oder akustische Schnittstelle eine Fehlermeldung ausgegeben; und/oder
iii) es wird über eine Remote-Control-Schnittstelle des Sauggreifers eine Meldung beispielsweise an eine Fernwartungsstelle ausgegeben.

Bei der Analyse des bei Betätigung des Sauggreifers von dem mindestens einen Sensorelement aufgenommenen Ansprechsignals wird gemäß Ausführungsformen der vorliegenden Erfindung zunächst die Art der Abweichung des aufgenommenen Ansprechsignals von einem vorgegebenen (idealen) Ansprechsignal bestimmt. Auf diese Weise kann ein Rückschluss auf die Ursache für die Abweichung des aufgenommenen Ansprechsignals bzw. ein Rückschluss auf die Abweichung des Soll-Ansprechsignals getroffen werden.

Anschließend kann festgestellt werden, ob die über das mindestens eine Sensorelement erfasste Abweichung zu einer Änderung der Performance des Sauggreifers führen kann. Wenn dies der Fall sein sollte, wird geprüft, ob eine Möglichkeit besteht, regelnd auf die Ansteuerung des Sauggreifers einzuwirken, um die potentielle Änderung der Performance kompensieren zu können.

Gleichzeitig oder alternativ hierzu wird in Abhängigkeit von der ermittelten Ursache für die Abweichung des Ist-Ansprechsignals von dem Soll-Ansprechsignal (= ideales Ansprechsignal) eine akustische und/oder optische Fehlermeldung oder dergleichen Nachricht an den Betreiber des Sauggreifers ausgegeben, so dass dieser entsprechende Maßnahmen unternehmen kann.

Wird hingegen bestimmt, dass zur Behebung der Fehlerquelle die Unterstützung von externem Servicepersonal erforderlich ist, wird von einem Steuersystem vorzugsweise automatisch über eine Remote-Control-Schnittstelle eine entsprechende Fehlermeldung an eine Fernwartungsstelle ausgegeben. Dies kann beispielsweise dann der Fall sein, wenn ein mechanischer Verschleiß von Komponenten des Sauggreifers oder Komponenten des Sauggreifers oder eine Undichtigkeit in dem Pneumatiksystem zur Ansteuerung des Sauggreifers die Ursache für die Abweichung des aufgenommenen Schwingungsspektrums ist.

Die Fernwartung (Remote Maintenance) von Sauggreifern gewinnt beim Support der Hard- und Software von Sauggreiferherstellern zunehmend an Bedeutung. Durch die immer stärkere Vernetzung der Steuersysteme von Robotern und Sauggreifern über das Internet, den Aufbau von firmeninternen Intranets und herkömmliche Telekommunikationswege (ISDN, Telefon, etc.) erweitern sich die Möglichkeiten der direkten Unterstützung beim Support. Nicht zuletzt wegen der Einsparmöglichkeiten bei Reisekosten und die bessere Ressourcennutzung (Personal und Technik) werden Produkte der Fernwartung zur Kostensenkung in Unternehmen genutzt. Fernwartungsprogramme ermöglichen es dem entfernt sitzenden Servicetechniker, direkt auf den überwachten Sauggreifer zuzugreifen und dessen Status abzufragen, um vorausschauende Gegenmaßnahmen, wie beispielsweise Wartungsintervalle, einzuplanen und durchzuführen.

In einer bevorzugten Realisierung des erfindungsgemäßen Sauggreifers ist das mindestens eine Sensorelement des dem Sauggreifer zugeordneten Funktionsüberwachungssystems zumindest teil- oder bereichsweise in dem Material des Saugnapfhalters und/oder in dem Material des Saugnapfes integriert, insbesondere einvulkanisiert. Auf diese Weise kann der Saugnapf und der Saugnapfhalter von den Abmessungen und Dimensionen unverändert bleiben im Vergleich zu einem Sauggreifer, welchem kein System zur Funktionsüberwachung zugeordnet ist.

Im Folgenden wird die Erfindung mit Bezug auf die beiliegenden Zeichnungen näher beschrieben.

In den Zeichnungen zeigen:
- FIG. 1: schematisch eine Draufsicht auf eine exemplarische Ausführungsform des erfindungsgemäßen Sauggreifers von der Blickrichtung eines anzusaugenden bzw. handzuhabenden Gegenstandes, und
- FIG. 2: einen teilweisen Querschnitt durch die Ansicht aus FIG. 1.

Nachfolgend werden unter Bezugnahme auf die beiliegenden Zeichnungen der Aufbau und die Funktionsweise einer exemplarischen Ausführungsform des erfindungsgemäßen Sauggreifers näher beschrieben.

Der Sauggreifer 100 gemäß dieser Ausführungsform besteht aus zwei Teilen, nämlich dem als elastisches Formteil aus Gummi, Naturkautschuk oder gummielastischem Material ausgebildeten Saugnapf 1 und dem diesen Saugnapf 1 haltenden, vorzugsweise aus Metall gefertigten Saugnapfhalter 2. Der Saugnapfhalter 2 weist bei der dargestellten Ausführungsform eine erste, dezentral angeordnete Bohrung 3 zum Anlegen eines Unterdrucks eine zweite, zentral angeordnete Bohrung 4 zum Anlegen eines Überdrucks zwischen Sauggreifer 100 und (nicht dargestelltem) Werkstück auf, wobei eine oder beide dieser Bohrungen auch dazu dienen können, den Sauggreifer 100 am Ende eines (ebenfalls nicht dargestellten) Manipulators oder Roboterarms zu befestigen.

Der aus gummielastischem Material bestehenden Saugnapf 1 weist zu den Bohrungen 3 und 4 korrespondierende Öffnungen 5 bzw. 6 auf, so dass der angelegte Unter- bzw. Überdruck auch in den dem Werkstück zugewandten Raum gelangen kann.

Die dem Werkstück zugewandte Oberfläche des Saugnapfs 1 weist verschiedene, im Spritzgussverfahren in den Saugnapf 1 eingebrachte Profilierungen auf. Zunächst befindet sich zwischen der inneren, zentralen Öffnung 6 des Saugnapfs 1 und dessen Peripherie eine erste umlaufende Dichtung 7, welche den inneren Überdruckbereich von dem äußeren peripheren Unterdruckbereich abgrenzt und abdichtet. Diese Dichtung 7 ist eine schmale, stegförmig aus der Oberfläche des Saugnapfs 1 hervorstehende Dichtung mit zwei Dichtlippen, deren Form man als W-Form beschreiben könnte. Durch die Verwendung von zwei nebeneinander liegenden Dichtlippen wird eine bessere Abdichtung gewährleistet. Ferner ist von Bedeutung, dass die Dichtung 7 im Wesentlichen senkrecht aus der Oberfläche des Saugnapfs 1 hervorsteht, als während des Ansaugens und Loslassens des Werkstücks keine laterale Bewegung mit entsprechender Reibung auf dem Werkstück vollzieht.

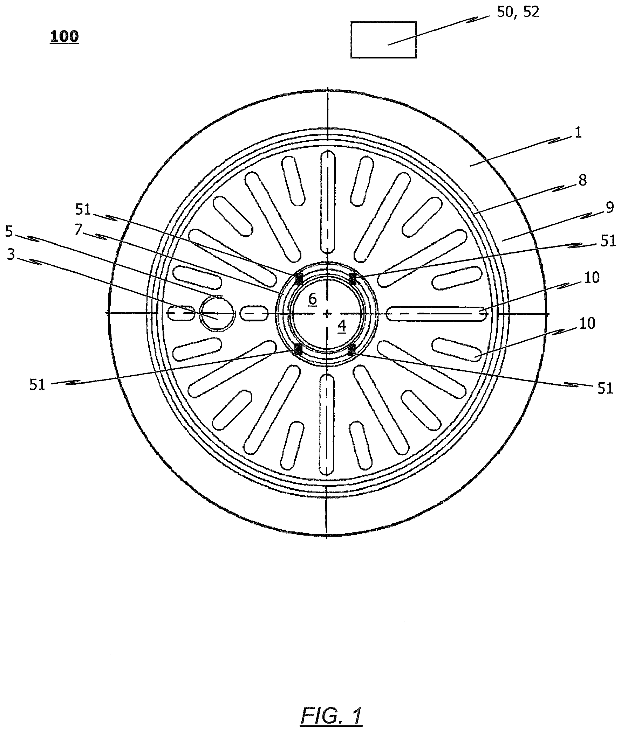

Im Randbereich des Saugnapfs 1 weist dieser, ebenfalls an seiner dem Werkstück zugewandten und in FIG. 1 dargestellten Oberfläche eine weitere umlaufende Dichtung 8 auf, die im Wesentlichen genauso gestaltet ist wie die Dichtung 7, also die genannte W-Form mit zwei Dichtlippen aufweist und im Wesentlichen senkrecht aus der Oberfläche des Saugnapfs 1 hervorsteht. Diese äußere Dichtung 8 dient der Abdichtung des Vakuums gegenüber der Atmosphäre.

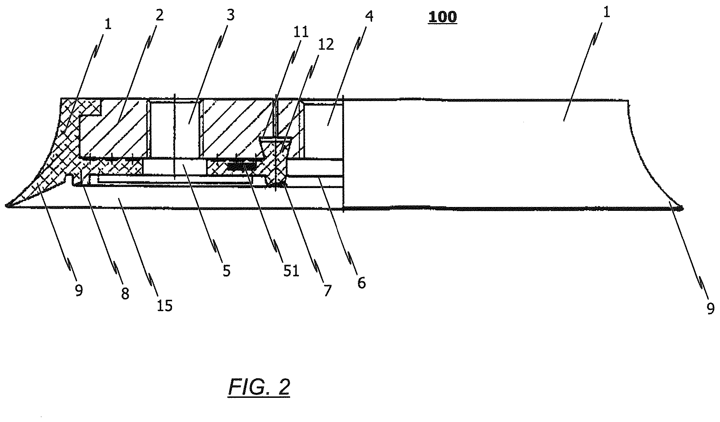

Entlang seiner Außenseite, also an seiner Peripherie, weist der vom Werkstück aus betrachtet runde Saugnapf 1 außerhalb der Außendichtung 8 eine schräg nach außen und in Richtung auf das Werkstück weisende Dichtfläche 9 auf, deren Dicke, gesehen in ihrem radialen Querschnitt (vergleiche FIG. 2) von innen nach außen kontinuierlich abnimmt. Hierdurch wird eine nach außen hin zunehmende Flexibilität dieser Dichtfläche gewährleistet, welche letztendlich in einer dünnen Dichtlippe ganz an der äußeren Peripherie des Saugnapfs 1 endet. Auf diese Weise ergibt sich bei unebenen Oberflächen, wo die Außendichtung 8 teilweise nur unvollständig anliegt, eine zusätzliche Dichtung, da sich die Dichtfläche 9 aufgrund der nach außen hin zunehmenden Elastizität der Werkstückoberfläche in einem gewissen Umfang anpassen kann.

Wie in FIG. 1 dargestellt weist der Saugnapf 1 an seiner dem Werkstück zugewandten Oberfläche erhabene Stege 10 auf, die im dargestellten Ausführungsbeispiel radial nach außen weisen, wobei sich Stege unterschiedlicher Länge abwechseln. Diese Stege 10 befinden sich im Vakuumraum, also zwischen den beiden umlaufenden Dichtungen 7 und 8 und dienen der Verbesserung des Reibschlusses zum angesaugten Werkstück.

Wie insbesondere in FIG. 2 zu erkennen ist weist der Saugnapfhalter 2 an seiner dem Saugnapf 1 zugewandten Seite eine umlaufende Nut 11 mit schwalbenschwanzförmigem Querschnitt auf. In diese Nut greif ein entsprechendes schwalbenschwanzförmiges Profil 12 des Saugnapfs ein. Ferner ist aus FIG. 2 ersichtlich, dass der Saugnapf 1 an seiner dem Werkstück abgewandten Außenseite den Saugnapfhalter 2 radial übergreift. Durch diese Kombination aus äußerem Übergreifen und schwalbenschwanzförmiger inneren Aufnahme wird eine leichte Montierbarkeit des Saugnapfs 1 auf dem Saugnapfhalter 2 ermöglicht, da lediglich von innen nach außen montiert werden muss. Zunächst wird hierbei das schwalbenschwanzförmige Profil 12 des Saugnapfs 1 in die entsprechende Nut 11 des Saugnapfhalters 2 eingesteckt und anschließend der Rand des Saugnapfs 1 über die Außenseite des Saugnapfhalters 2 gestülpt. So ist auch ein schnelles Ersetzen eines verschlissenen Saugnapfs 1 auf dem Saugnapfhalter 2 ohne Werkzeug möglich. Schließlich bietet die Schwalbenschwanzaufnahme (Bezugszahlen 11 und 12) den Vorteil, dass im Betrieb ein Nachgeben des Profils 12 und damit der unmittelbar darunter angeordneten inneren Dichtung 7 damit eine Anpassung an verschieden Oberflächen des handzuhabenden Werkstücks möglich ist.

Der erfindungsgemäße Sauggreifer 100 zeichnet sich insbesondere dadurch aus, dass er mit einem System 50 zur Funktionsüberwachung ausgerüstet ist. Dieses System 50 weist mindestens ein in dem Sauggreifer 100 angeordnetes Sensorelement 51 auf, wobei das mindestens eine Sensorelement 51 ausgebildet ist, ein Sensorsignal auszugeben, welches - zumindest in einem dynamischen Bereich des Sensorelements 51 - direkt oder indirekt von dem Wert eines Unterdruckes abhängt, welcher sich bei Betätigung des Sauggreifers 100 in dem Saugraum des Sauggreifers 100 einstellt.

Bei dem mindestens einen Sensorelement 51 handelt es sich insbesondere um ein MEMS-Sensor, welcher in dem Material des Saugnapfes 1 und/oder in dem Material des Saugnapfhalters 2 zumindest teilweise bzw. bereichsweise integriert ist.

Alternativ hierzu ist es selbstverständlich aber auch denkbar, das mindestens eine Sensorelement 51 an einer Innenseite des Saugnapfes 1 bzw. des Saugnapfhalters 2 derart anzuordnen, dass die aktive Fläche bzw. der aktive Bereich des mindestens einen Sensorelements 51 in Richtung des Saugraumes des Sauggreifers 100 zeigt.

Das mindestens eine Sensorelement 51, welches in den Zeichnungen nur schematisch dargestellt ist, ist vorzugsweise ein Drucksensor, insbesondere Miniatur-Drucksensor oder eine entsprechende druckempfindliche Folie, insbesondere auf MEMS-Basis, die in dem Material des flexiblen Saugnapfes 1 integriert ist, wie beispielsweise einvulkanisiert oder eingegossen.

Das mindestens eine Sensorelement 51 zeichnet sich insbesondere dadurch aus, dass die von dem mindestens einen Sensorelement 51 aufgenommenen Sensorsignale entweder drahtlos oder drahtgebunden an eine entsprechende Auswerteeinrichtung 52 des dem Sauggreifer 100 zugeordneten Systems 50 zur Funktionsüberwachung übertragbar sind. Für den Fall, dass das mindestens eine Sensorelement 51 drahtgebunden ausgeführt ist, ist die Datenleitung vorzugsweise ebenfalls in dem Material des flexiblen Saugnapfes 1 integriert (beispielsweise einvulkanisiert oder eingegossen).

Das System 50 zur Funktionsüberwachung, welches dem erfindungsgemäßen Sauggreifer 100 zugeordnet ist, weist ferner die zuvor genannte Auswerteeinrichtung 52 auf, welche ausgebildet ist, das von dem mindestens einen Sensorelement 51 beim Betätigen des Sauggreifers 100 aufgenommene Sensorsignal entsprechend auszuwerten. Zu diesem Zweck ist die Auswerteeinrichtung 52 ausgebildet, dass von dem mindestens einen Sensorelement 51 aufgenommene Sensorsignal entweder in Echtzeit aus dem mindestens einen Sensorelement 51 auszulesen oder bei Bedarf aus einer zu dem mindestens einen Sensorelement 51 gehörenden Speichereinrichtung auszulesen, jeweils vorzugsweise drahtlos auszulesen. Für ein drahtloses Auslesen des beim Betätigen des Sauggreifers 100 über das mindestens eine Sensorelement 51 aufgenommenen Ansprechsignals kommen verschiedene Technologien in Frage, wie beispielsweise die RFID-Technologie, Bluetooth, Wifi, NFC-Funk, etc.

Selbstverständlich ist es aber auch denkbar, die Auswerteeinrichtung 52 in Gestalt einer Smartphone-App umzusetzen, welche beispielsweise per Wifi, Bluetooth, NFC, etc. das von dem mindestens einen Sensorelement 51 aufgenommene Ansprechsignal empfängt und anschließend analysiert.

Insbesondere findet die Überwachung der Funktionsweise des Sauggreifers 100 anhand eines Ansprechsignals statt, welches von dem mindestens einen Sensorelement 51 beim Betätigen des Sauggreifers 100 aufgenommen wird.

Unter dem hierin verwendeten Ausdruck "Betätigen des Sauggreifers 100" ist ein Vorgang zu verstehen, bei welchem der Sauggreifer 100 bzw. der flexible Saugnapf 1 des Sauggreifers 100 auf einen zu handhabenden Gegenstand gesetzt wird und dann in dem von dem Saugnapf 1 begrenzten Saugraum ein Vakuum angelegt wird, wobei die Höhe des zum Betätigen des Sauggreifers 100 an dem Sauggreifer 100 angelegten Vakuums bekannt ist bzw. vorabfestlegbar oder festgelegt ist.

Bei der in den Zeichnungen dargestellten exemplarischen Ausführungsform des erfindungsgemäßen Sauggreifers 100 ist vorgesehen, dass das mindestens eine Sensorelement 51 im oder am hinteren Endbereich des Saugnapfes 1 angeordnet und vorzugsweise zumindest bereichsweise in dem Material des hinteren Endbereiches des Saugnapfes 1 integriert ist.

Selbstverständlich ist es aber auch denkbar, wenn das mindestens eine Sensorelement 51 im oder am Saugnapfhalter 2 angeordnet bzw. zumindest bereichsweise in dem Material des Saugnapfhalters 2 integriert ist.

Insbesondere ist es in diesem Zusammenhang von Vorteil, wenn der hintere Endbereich des Saugnapfes 1 zumindest bereichsweise durch eine Ebene gebildet wird, welche zumindest im Wesentlichen parallel zu einer Ebene verläuft, in welcher die Saugöffnung des Saugnapfes 1 liegt, und über welche der Saugnapf 1 mit dem Saufnapfhalter verbunden ist. Dabei sollte das mindestens eine Sensorelement 51 zumindest bereichsweise in der den Saugnapf 1 mit dem Saufnapfhalter verbindenden Ebene oder in einer hierzu parallel verlaufenden Ebene angeordnet sein.

Denkbar in diesem Zusammenhang ist es beispielweise, wenn das mindestens eine Sensorelement 51 zumindest bereichsweise um die Mündungsöffnung 5, 6 eines in den Saugraum des Sauggreifers 100 mündenden Kanals (Bohrung 3, 4), welcher mit einer Unterdruck- oder Überdruckquelle in Strömungsverbindung bringbar ist, angeordnet ist.

Das für den erfindungsgemäßen Sauggreifer 100 zugeordnete Überwachungssystem 50 zeichnet sich insbesondere dadurch aus, dass es nicht nur einen insbesondere schleichenden Verschleiß von Komponenten des Sauggreifers 100 erfassen kann, sondern auch prüfen kann, ob sich ein bei Betätigung des Sauggreifers 100 in dem Saugraum einstellender Unterdruck einem vorab festgelegten oder festlegbaren Soll-Wert entspricht. Auch dies ist über das von dem mindestens einen Sensorelement 51 ausgegebenen Ansprechsignal ableitbar.

Insbesondere kann - nach geeigneter Eichung bzw. Kalibrierung - ein sich in dem Saugraum tatsächlich einstellender Unterdruck beim Betätigen des Sauggreifers 100 geprüft werden. Auf diese Weise sind potentielle Druckverluste bzw. Vakuumverluste in einem Leitungssystem zum Sauggreifer 100 identifizierbar. Vorausgesetzt hierfür ist, dass der ursprünglich in dem Leitungssystem eingestellter Unterdruck zum Betätigen des Sauggreifers 100 bekannt ist.

Mit anderen Worten, wenn in das zu dem Sauggreifer 100 führende Leistungssystem ein Unterdruck von beispielsweise 0,5 bar eingestellt wird, und wenn bei Betätigung des Sauggreifers 100 ein Ansprechsignal aufgenommen wird, welches einem in dem Saugraum anliegenden Unterdruck von 0,7 bar entspricht, ist davon auszugehen, dass der an dem Sauggreifer 100 anliegende Ist-Wert bzw. in dem Saugraum anliegende Ist-Wert des Unterdruckes deutlich höher ist als der ursprünglich eingestellte Unterdruck.

Indem über eine längere Zeitperiode entsprechende Ansprechsignale bei einem bekannten und zur Betätigung des Sauggreifers 100 an dem Sauggreifer 100 angelegten Unterdruck aufgenommen werden, ist ein schleichender Druckaufbau und somit ein schleichender Verschleiß des Sauggreifers 100 erfassbar.

Ein solcher schleichender Druckaufbau kann beispielsweise durch Leckagen in den Leitungssystem zu dem Sauggreifer 100, durch Leckagen an der Anbindung des Sauggreifers 100 an das Leitungssystem und/oder durch Leckagen in Komponenten des Sauggreifers 100, insbesondere in dem flexiblen Saugnapf 1 des Sauggreifers 100, hervorgerufen werden.

In diesem Zusammenhang ist es beispielsweise denkbar, dass regelmäßig, insbesondere an vorab festgelegten oder festlegbaren Zeitpunkten, ein entsprechendes Ansprechsignal des mindestens einen Sensorelements 51 bei einem bekannten Wert eines zur Betätigung des Sauggreifers 100 an dem Sauggreifer 100 eingestellten Unterdruckes aufgenommen wird, um so sicherzustellen, dass der Ist-Wert eines sich beim Betätigen des Sauggreifers 100 in dem Saugraum einstellenden Unterdruckes die Performance des Sauggreifers 100 nicht mindert.

In besonders bevorzugter Weise ist das dem erfindungsgemäßen Sauggreifer 100 zugeordnete Überwachungssystem ausgebildet, beispielsweise bei Inbetriebnahme, insbesondere bei der erstmaligen Inbetriebnahme des Sauggreifers 100, in einem Lernmodus vorzugsweise für unterschiedliche Materialien des zugreifenden Gegenstandes ein charakteristisches Ansprechsignal beim Betätigen des Sauggreifers 100 aufzunehmen. Dieses mindestens eine im Lernmodus aufgenommene Ansprechsignal wird insbesondere bei unterschiedlichen Ist-Werten eines zum Betätigen des Sauggreifers 100 an dem Sauggreifer 100 anliegenden Unterdruckes aufgenommen und in einer Speichereinheit der Auswerteeinrichtung 52 abgelegt.

Anschließend werden anhand der im Lernmodus aufgenommenen Ansprechsignale entsprechende Alarmschwellen festgelegt. Diese Alarmschwellen werden vorzugsweise so gewählt, dass frühzeitig der Betreiber des Sauggreifers 100 über einen Performanceverlust des Sauggreifers 100 informiert wird.

Die vorliegende Erfindung ermöglicht somit eine produktionsnahe Instandhaltung von Sauggreifern, und zwar in dem eine zustandsorientierte Instandhaltung möglich wird. Durch intelligente Datenanalyse in der Auswerteeinrichtung 52 werden in dem Ansprechsignal auffällige Abweichungen identifiziert, die auf eine Störung hinweisen. So können präventive Maßnahmen ergriffen und Ausfälle vermieden werden. Stillstandzeiten und Produktionsstillstände werden somit minimiert.

Insbesondere ermöglicht, dass dem erfindungsgemäßen Sauggreifer 100 zugeordnete Überwachungssystem eine möglichst präzise Vorausplanung der Instandhaltung, wodurch insbesondere auch unerwartete Ausfälle von Sauggreifern vermieden werden können. Mit dem Wissen darüber, wann welcher Sauggreifer 100 gewartet werden muss, lassen sich Ressourcen für Instandhaltungsarbeiten, wie Ersatzteile oder Personen, besser planen. Zudem kann die Verfügbarkeit der Anlage, in welcher der Sauggreifer 100 oder mehrere Sauggreifer 100 zum Einsatz kommt/kommen, erhöht werden, und zwar in dem "ungeplante Stopps" in immer kürzere und häufigere "geplante Stopps" umgewandelt werden.

Weitere Vorteile ergeben sich in einer längeren Lebensdauer des Sauggreifers 100 und Roboterarme, eine erhöhte Anlagensicherheit, weniger Unfälle mit negativen Auswirkungen auf die Umwelt und ein optimiertes Ersatzteil-Handling.

Das dem erfindungsgemäßen Sauggreifer 100 zugeordnete Überwachungssystem ermöglicht insbesondere eine vorausschauende Instandhaltung, und zwar indem es sich auf den tatsächlichen Zustand des bzw. der von dem System 50 überwachten Sauggreifer 100 und nicht auf die durchschnittliche oder erwartete Lebensdauer stützt, um vorauszusagen, bei welchem Sauggreifer 100 wann eine Wartung erforderlich ist.

In einer Weiterbildung der erfindungsgemäßen Lösung eignet sich das mindestens eine in dem Sauggreifer 100 angeordnete Sensorelement 51 auch dazu, eine Aussage über Gegenstände treffen zu können, die von dem Sauggreifer 100 gegriffen wurden. Dies betrifft insbesondere das Material, die Größe und/oder das Gewicht der Gegenstände sowie die Frage, ob ein Gegenstand richtig von dem Saugnapf 1 des Sauggreifers 100 gegriffen wurde.

Gemäß Ausführungsformen des erfindungsgemäßen Sauggreifers 100 ist vorgesehen, dass mit dem mindestens einen Sensorelement 51 während der Betätigung des Sauggreifers 100 ein entsprechendes Sensorsignal aufgenommen wird. Bei dieser Ausführungsform ist das System 50 zur Funktionsüberwachung insbesondere ausgelegt, anhand des Sensorsignals sowie unter Zuhilfenahme des angelegten Unterdruckes eines mit dem Sauggreifer 100 verbundenen Vakuumerzeugers das Gewicht zu ermitteln, welches von dem Sauggreifer 100 gehalten wird. Bei dieser Gewichtsmessung wurde vorzugsweise bei Inbetriebnahme und insbesondere bei der erstmaligen Inbetriebnahme des Sauggreifers 100 entsprechende Kalibrierungen durchgeführt, und zwar bei bekannten Gewichten, die von dem Sauggreifer 100 bei unterschiedlichen Unterdrücken angesaugt werden.

Alternativ oder zusätzlich zu solch einer Kalibrierung ist es aber auch denkbar, dass das System zur Funktionsüberwachung ausgebildet ist, mit Hilfe des aufgenommenen Sensorsignals und unter Zuhilfenahme des angelegten Unterdruckes sowie unter Zuhilfenahme von theoretischen Werten der Saugfläche des Sauggreifers 100 ein Proportional für das Gewicht zu ermitteln, welches der Sauggreifer 100 hält.

Alternativ oder zusätzlich hierzu ist das System 50 zur Funktionsüberwachung auch ausgebildet, mechanische Schwingungen zu detektieren. Dies ist insbesondere dann möglich, wenn über einem relativ langen Zeitverlauf von dem mindestens einen Sensorelement 51 ein Sensorsignal aufgenommen wird. Wenn dann von der Auswerteeinrichtung erkannt wird, dass das aufgenommene Sensorsignal einen pulsierenden (insbesondere sinusförmigen) Signal verläuft zeigt, ist dies ein Indikator für mechanische Schwingungen. Stetig ansteigende Amplituden könnten dann beispielsweise Aufschluss geben über Probleme im EOAT (EOAT=End of Arm Tooling) inklusive einer Roboterachse, mit welcher zumindest indirekt Sauggreifer 100 verbunden sind.

## Patentansprüche

1. Sauggreifer (100) zum Handhaben von Gegenständen, wobei der Sauggreifer (100) Folgendes aufweist:
- einen flexiblen Saugnapf (1), der einen an eine Unterdruckquelle anschließbaren Saugraum (15) begrenzt und einen an eine Saugöffnung angrenzenden vorderen Endbereich sowie einen gegenüberliegenden hinteren Endbereich aufweist; und
- einen Saugnapfhalter (2), welcher mit dem hinteren Endbereich des Saugnapfes (1) verbunden ist,
wobei dem Sauggreifer (100) ein System (50) zur Funktionsüberwachung zugeordnet ist, welches mindestens ein in dem Sauggreifer (100) angeordnetes Sensorelement (51) aufweist, wobei das mindestens eine Sensorelement (51) ausgebildet ist, ein Sensorsignal auszugeben, welches im dynamischen Bereich des Sensorelements (51) direkt oder indirekt von dem Wert eines in dem Saugraum (15) anliegenden Unterdruckes abhängt,
wobei das System (50) zur Funktionsüberwachung eine Auswerteeinrichtung (52) aufweist zum Auswerten des von dem mindestens einen Sensorelement (51) ausgegebenen Sensorsignals, wobei die Auswerteeinrichtung (52) aus dem von dem mindestens einen Sensorelement (51) ausgegebenen Sensorsignal eine äquivalente, auf das Sensorelement (51) einwirkende Druckkraft ableitet und den abgeleiteten Wert der Druckkraft mit einem vorab festgelegten oder festlegbaren Sollwert vergleicht.

2. Sauggreifer (100) nach Anspruch 1,
wobei das mindestens eine Sensorelement (51) zumindest teil- oder bereichsweise in dem Material des Saugnapfhalters (2) und/oder in dem Material des Saugnapfes (1) integriert, insbesondere einvulkanisiert ist.

3. Sauggreifer (100) nach Anspruch 1 oder 2,
wobei der Saugnapf (1) eine die Saugöffnung umgebene Dichtung (7, 8) insbesondere in Gestalt von mindestens einer Dichtlippe aufweist, welche zumindest indirekt mit dem hinteren Endbereich des Saugnapfes (1) verbunden ist.

4. Sauggreifer (100) nach einem der Ansprüche 1 bis 3,
wobei das mindestens eine Sensorelement (51) im oder am hinteren Endbereich des Saugnapfes (1) angeordnet und vorzugsweise zumindest bereichsweise in dem Material des hinteren Endbereiches des Saugnapfes (1) integriert ist, und/oder wobei das mindestens eine Sensorelement (51) im oder am Saugnapfhalter (2) angeordnet und vorzugsweise zumindest bereichsweise in dem Material des Saugnapfhalters (2) integriert ist.

5. Sauggreifer (100) nach einem der Ansprüche 1 bis 4,
wobei der hintere Endbereich des Saugnapfes (1) zumindest bereichsweise durch eine Ebene gebildet wird, welche zumindest im Wesentlichen parallel zu einer Ebene verläuft, in welcher die Saugöffnung liegt, und über welche der Saugnapf (1) mit dem Saugnapfhalter (2) verbunden ist, und wobei das mindestens eine Sensorelement (51) zumindest bereichsweise in der den Saugnapf (1) mit dem Saugnapfhalter (2) verbindenden Ebene oder in einer hierzu parallel verlaufenden Ebene angeordnet ist.

6. Sauggreifer (100) nach einem der Ansprüche 1 bis 5,
wobei in dem Saugnapfhalter (2) mindestens ein mit einer Unterdruck- oder Überdruckquelle in Strömungsverbindung bringbarer Kanal (3, 4) ausgebildet ist, welcher in den Saugraum (15) des Sauggreifers (100) mündet, wobei das mindestens eine Sensorelement (51) zumindest bereichsweise um die Mündungsöffnung des mindestens einen Kanals (3, 4) angeordnet ist.

7. Sauggreifer (100) nach einem der Ansprüche 1 bis 6,
wobei das mindestens eine Sensorelement (51) ein druckempfindliches Sensorelement (51), insbesondere ein druckempfindliches Flächenelement aufweist.

8. Sauggreifer (100) nach einem der Ansprüche 1 bis 7,
wobei der vordere Endbereich des Saugnapfes (1) unter Veränderung der Saugnapflänge relativ zu dem hinteren Endbereich des Saugnapfes (1) und relativ zu dem Saugnapfhalter (2) bewegbar ist, wobei das mindestens eine Sensorelement (51) eine aktive Sensorfläche aufweist, die in einer Ebene liegt, welche den von dem Saugnapf (1) begrenzenden Saugraum (15) schneidet.

9. Sauggreifer (100) nach einem der Ansprüche 1 bis 8,
wobei das System (50) zur Funktionsüberwachung eine Auswerteeinrichtung (52) aufweist, wobei die Auswerteeinrichtung (52) ausgebildet ist, über eine vorab festgelegte oder festlegbare Zeitperiode einen von dem mindestens einen Sensorelement (51) ausgegebenen Signalverlauf aufzunehmen und zu analysieren, wobei der Signalverlauf vorzugsweise über eine Zeitperiode aufgenommen wird, in welcher der Sauggreifer (100) mindestens einmal betätigt wird, vorzugsweise mit einem bekannten Sollwert eines Betätigungsdruckes.

10. Sauggreifer (100) nach Anspruch 9,
wobei der Signalverlauf bzw. das aufgenommene Sensorsignal bei einem vorab festgelegten oder festlegbaren Sollwert eines am Sauggreifer (100) anliegenden Betätigungsdruckes aufgenommen wird, und wobei die Auswerteeinrichtung (52) ausgebildet ist, den aufgenommenen Signalverlauf bzw. das aufgenommenen Sensorsignal mit einem Referenzverlauf bzw. Referenzwert zu vergleichen.

11. Verfahren zum Überwachen der Funktionsweise eines Sauggreifers (100), nach einem der Ansprüche 1 bis 10, wobei mit Hilfe des in dem Saugraum (15) des Sauggreifers (100) angeordneten Sensorelements (51) mindestens eine Druckmessung über eine vorab festgelegte Zeitperiode aufgenommen und das von dem Sensorelement (51) ausgegebene Sensorsignal analysiert wird.

12. Verfahren nach Anspruch 11,
wobei vorzugsweise bei Inbetriebnahme, insbesondere bei einer erstmaligen Inbetriebnahme des Sauggreifers (100), in einem Lernmodus mindestens ein charakteristisches Ansprechsignal des Sensorelements (51) beim Betätigen des Sauggreifers (100) aufgenommen wird und anhand des im Lernmodus aufgenommenen Ansprechsignals entsprechende Alarmschwellen festgelegt werden.

13. Verfahren nach Anspruch 11 oder 12,
wobei vorzugsweise kontinuierlich, zu vorgegebenen oder vorgebbaren Zeiten und/oder Ereignissen und/oder bedarfsweise aus dem von dem mindestens einen Sensorelement (51) ausgegebenen Sensorsignal eine äquivalente, auf das Sensorelement (51) einwirkende Druckkraft und/oder einen äquivalenten, auf das Sensorelement (51) einwirkenden Druck abgeleitet wird und der abgeleitete Wert der Druckkraft bzw. des Druckes mit einem vorab festgelegten oder festlegbaren Sollwert verglichen wird; und/oder
wobei über eine vorab festgelegte oder festlegbare Zeitperiode ein von dem mindestens einen Sensorelement (51) ausgegebener Signalverlauf aufgenommen und analysiert, wobei der Signalverlauf vorzugsweise über eine Zeitperiode aufgenommen wird, in welcher der Sauggreifer (100) mindestens einmal betätigt wird, vorzugsweise mit einem bekannten Sollwert eines Betätigungsdruckes.

14. Verfahren nach Anspruch 13,
wobei der Signalverlauf bzw. das aufgenommene Sensorsignal bei einem vorab festgelegten oder festlegbaren Sollwert eines am Sauggreifer (100) anliegenden Betätigungsdruckes aufgenommen wird, und wobei der aufgenommene Signalverlauf bzw. das aufgenommene Sensorsignal mit einem Referenzverlauf bzw. Referenzwert verglichen wird.

## Claims

1. A vacuum gripper (100) for handling objects, wherein the vacuum gripper (100) comprises the following:
- a flexible suction cup (1) which defines a suction chamber (15) able to be connected to a vacuum source and a front end region adjacent a suction opening as well as an oppositely disposed rear end region; and
- a suction cup holder (2) connected to the rear end region of the suction cup (1),
wherein the vacuum gripper (100) is allocated a system (50) for function monitoring which comprises at least one sensor element (51) arranged in the vacuum gripper (100), wherein the at least one sensor element (51) is designed to output a sensor signal which, in the dynamic range of the sensor element (51), depends directly or indirectly on the negative pressure value within the suction chamber (15),
wherein the system (50) for function monitoring comprises an evaluation device (52) for evaluating the sensor signal output by the at least one sensor element (51), wherein the evaluation device (52) derives an equivalent compressive force acting on the sensor element (51) from the sensor signal output by the at least one sensor element (51) and compares the derived compressive force value to a predefined or definable target value.

2. The vacuum gripper (100) according to claim 1,
wherein the at least one sensor element (51) is at least in part or partially integrated, in particular vulcanized, into the material of the suction cup holder (2) and/or the material of the suction cup (1).

3. The vacuum gripper (100) according to claim 1 or 2,
wherein the suction cup (1) comprises a seal (7, 8) surrounding the suction opening, particularly in the form of at least one sealing lip, which is at least indirectly connected to the rear end region of the suction cup (1).

4. The vacuum gripper (100) according to one of claims 1 to 3,
wherein the at least one sensor element (51) is arranged in or on the rear end region of the suction cup (1) and preferably at least partially integrated into the material of the rear end region of the suction cup (1), and/or wherein the at least one sensor element (51) is arranged in or on the suction cup holder (2) and preferably at least partially integrated into the material of the suction cup holder (2).

5. The vacuum gripper (100) according to one of claims 1 to 4,
wherein the rear end region of the suction cup (1) is at least in part formed by a plane running at least substantially parallel to a plane in which the suction opening is situated and via which the suction cup (1) is connected to the suction cup holder (2), and wherein the at least one sensor element (51) is at least partially arranged in the plane connecting the suction cup (1) to the suction cup holder (2) or in a plane running parallel thereto.

6. The vacuum gripper (100) according to one of claims 1 to 5,
wherein at least one channel (3, 4) able to be brought into fluid communication with a negative or positive pressure source and opening into the suction chamber (15) of the vacuum gripper (100) is formed in the suction cup holder (2), wherein the at least one sensor element (51) is at least in part arranged around the outlet opening of the at least one channel (3, 4).

7. The vacuum gripper (100) according to one of claims 1 to 6,
wherein the at least one sensor element (51) comprises a pressure-sensitive sensor element (51), in particular a pressure-sensitive surface element.

8. The vacuum gripper (100) according to one of claims 1 to 7,
wherein the front end region of the suction cup (1) is movable relative to the rear end region of the suction cup (1) and relative to the suction cup holder (2) upon the length of the suction cup changing, wherein the at least one sensor element (51) exhibits an active sensor surface situated in a plane intersecting the suction chamber (15) delimited by the suction cup.

9. The vacuum gripper (100) according to one of claims 1 to 8,
wherein the system (50) for function monitoring comprises an evaluation device (52), wherein the evaluation device (52) is designed to record and analyze a signal sequence output by the at least one sensor element (51) over a predefined or definable period of time, wherein the signal sequence is preferably recorded over a time period in which the vacuum gripper (100) is actuated at least once, preferably at a known actuating pressure target value.

10. The vacuum gripper (100) according claim 9,
wherein the signal sequence, or recorded sensor signal respectively, is recorded at a predefined or definable actuating pressure target value applied to the vacuum gripper (100), and wherein the evaluation device (52) is designed to compare the recorded signal sequence, or recorded sensor signal respectively, to a reference history or reference value.

11. A method for monitoring the functionality of a vacuum gripper (100) according to one of claims 1 to 10, wherein at least one pressure measurement is recorded over a predefined period of time by means of the sensor element (51) arranged in the suction chamber (15) of the vacuum gripper (100), and the sensor signal output by the sensor element (51) analyzed.

12. The method according to claim 11,
wherein at least one characteristic threshold signal of the sensor element (51) is recorded in a learning mode upon actuation of the vacuum gripper (100) preferably at the start of operation of the vacuum gripper (100), particularly when initially being put into operation for the first time, and corresponding alarm thresholds are defined on the basis of the threshold signal recorded in the learning mode.

13. The method according to claim 11 or 12,
wherein an equivalent compressive force acting on the sensor element (51) and/or an equivalent pressure acting on the sensor element (51) is derived preferably continuously, at predefined or definable times and/or events or as needed from the sensor signal output by the at least one sensor element (51) and the derived compressive force value or pressure compared to a predefined or definable target value;
and/or
wherein a signal sequence output by the at least one sensor element (51) is recorded over a predefined or definable period of time and analyzed, wherein the signal sequence is preferably recorded over a time period in which the vacuum gripper (100) is actuated at least once, preferably at a known actuating pressure target value.

14. The method according to claim 13,
wherein the signal sequence, or recorded sensor signal respectively, is recorded at a predefined or definable actuating pressure target value applied to the vacuum gripper (100), and wherein the recorded signal sequence, or recorded sensor signal respectively, is compared to a reference history or reference value.

## Revendications

1. Pince aspirante (100) pour manipuler des objets, la pince aspirante (100) comprenant :
- une ventouse flexible (1) qui délimite un espace d'aspiration (15) pouvant être raccordé à une source de dépression et qui présente une zone d'extrémité avant adjacente à une ouverture d'aspiration ainsi qu'une zone d'extrémité arrière opposée ; et
- un porte-ventouse (2) qui est relié à la zone d'extrémité arrière de la ventouse (1),
dans laquelle
un système (50) de surveillance du fonctionnement est associé à la pince aspirante (100), lequel présente au moins un élément capteur (51) disposé dans la pince aspirante (100), ledit au moins un élément capteur (51) étant réalisé pour émettre un signal de capteur qui, dans la plage dynamique de l'élément capteur (51), dépend directement ou indirectement de la valeur d'une dépression appliquée dans l'espace d'aspiration (15),
le système (50) de surveillance du fonctionnement comprend un dispositif d'évaluation (52) pour évaluer le signal de capteur émis par ledit au moins un élément capteur (51),
le dispositif d'évaluation (52) déduit, à partir du signal de capteur émis par ledit au moins un élément capteur (51), une force de pression équivalente agissant sur l'élément capteur (51) et compare la valeur déduite de la force de pression avec une valeur de consigne définie ou définissable préalablement.

2. Pince aspirante (100) selon la revendication 1,
dans laquelle ledit au moins un élément capteur (51) est intégré, en particulier vulcanisé, au moins partiellement ou localement dans le matériau du porte-ventouse (2) et/ou dans le matériau de la ventouse (1).

3. Pince aspirante (100) selon la revendication 1 ou 2,
dans laquelle la ventouse (1) comprend un joint d'étanchéité (7, 8) entourant l'ouverture d'aspiration, en particulier sous la forme d'au moins une lèvre d'étanchéité, qui est reliée au moins indirectement à la zone d'extrémité arrière de la ventouse (1).

4. Pince aspirante (100) selon l'une des revendications 1 à 3,
dans laquelle ledit au moins un élément capteur (51) est disposé dans ou sur la zone d'extrémité arrière de la ventouse (1) et est de préférence intégré au moins localement dans le matériau de la zone d'extrémité arrière de la ventouse (1), et/ou
ledit au moins un élément capteur (51) est disposé dans ou sur le porte-ventouse (2) et est de préférence intégré au moins localement dans le matériau du porte-ventouse (2).

5. Pince aspirante (100) selon l'une des revendications 1 à 4,
dans laquelle la zone d'extrémité arrière de la ventouse (1) est formée au moins localement par un plan qui s'étend au moins sensiblement parallèlement à un plan dans lequel se trouve l'ouverture d'aspiration et par lequel la ventouse (1) est reliée au porte-ventouse (2), et
ledit au moins un élément capteur (51) est disposé au moins localement dans le plan reliant la ventouse (1) au porte-ventouse (2) ou dans un plan qui s'étend parallèlement à celui-ci.

6. Pince aspirante (100) selon l'une des revendications 1 à 5,
dans laquelle au moins un canal (3, 4) pouvant être mis en communication fluidique avec une source de dépression ou de surpression est réalisé dans le porte-ventouse (2), lequel canal débouche dans l'espace d'aspiration (15) de la pince aspirante (100),
ledit au moins un élément capteur (51) est disposé au moins localement autour de l'ouverture d'embouchure dudit au moins un canal (3, 4).

7. Pince aspirante (100) selon l'une des revendications 1 à 6,
dans laquelle ledit au moins un élément capteur (51) comprend un élément capteur (51) sensible à la pression, en particulier un élément surfacique sensible à la pression.

8. Pince aspirante (100) selon l'une des revendications 1 à 7,
dans laquelle la zone d'extrémité avant de la ventouse (1) est mobile par rapport à la zone d'extrémité arrière de la ventouse (1) et par rapport au porte-ventouse (2) par modification de la longueur de la ventouse,
ledit au moins un élément capteur (51) présente une surface de capteur active située dans un plan qui coupe l'espace d'aspiration (15) délimité par la ventouse (1).

9. Pince aspirante (100) selon l'une des revendications 1 à 8,
dans laquelle le système (50) de surveillance du fonctionnement comprend un dispositif d'évaluation (52),
le dispositif d'évaluation (52) est réalisé pour enregistrer et analyser, sur une période de temps définie ou définissable préalablement, une courbe de signal émise par ledit au moins un élément capteur (51),
la courbe de signal est enregistrée de préférence sur une période de temps pendant laquelle la pince aspirante (100) est actionnée au moins une fois, de préférence avec une valeur de consigne connue d'une pression d'actionnement.

10. Pince aspirante (100) selon la revendication 9,
dans laquelle la courbe de signal ou le signal de capteur enregistré est enregistré(e) à une valeur de consigne définie ou définissable préalablement d'une pression d'actionnement appliquée à la pince aspirante (100), et
le dispositif d'évaluation (52) est réalisé pour comparer la courbe de signal enregistrée ou le signal de capteur enregistré avec une courbe de référence ou avec une valeur de référence.

11. Procédé de surveillance du fonctionnement d'une pince aspirante (100) selon l'une des revendications 1 à 10,
dans lequel, à l'aide d'un élément capteur (51) disposé dans l'espace d'aspiration (15) de la pince aspirante (100), au moins une mesure de pression est enregistrée sur une période de temps définie préalablement, et le signal de capteur émis par l'élément capteur (51) est analysé.

12. Procédé selon la revendication 11,
dans lequel, de préférence lors de la mise en service, en particulier lors d'une première mise en service de la pince aspirante (100), au moins un signal de réponse caractéristique de l'élément capteur (51) est enregistré dans un mode d'apprentissage lors de l'actionnement de la pince aspirante (100), et des seuils d'alarme correspondants sont définis à l'aide du signal de réponse enregistré dans le mode d'apprentissage.

13. Procédé selon la revendication 11 ou 12,
dans lequel, de préférence en continu, à des moments et/ou des événements prédéfinis ou prédéfinissables et/ou en fonction des besoins, une force de pression équivalente agissant sur l'élément capteur (51) et/ou une pression équivalente agissant sur l'élément capteur (51) est déduite du signal de capteur émis par ledit au moins un élément capteur (51), et la valeur déduite de la force de pression ou de la pression est comparée avec une valeur de consigne définie ou définissable préalablement ; et/ou
une courbe de signal émise par ledit au moins un élément capteur (51) est enregistrée et analysée sur une période de temps définie ou définissable préalablement, la courbe de signal étant de préférence enregistrée sur une période de temps pendant laquelle la pince aspirante (100) est actionnée au moins une fois, de préférence avec une valeur de consigne connue d'une pression d'actionnement.

14. Procédé selon la revendication 13,
dans lequel la courbe de signal ou le signal de capteur enregistré est enregistré(e) à une valeur de consigne définie ou définissable préalablement d'une pression d'actionnement appliquée à la pince aspirante (100), et
la courbe de signal enregistrée ou le signal de capteur enregistré est comparé(e) avec une courbe de référence ou avec une valeur de référence.
